Europäisches Patentamt

European Patent Office

Office européen des brevets

(19)

(11) Publication number: 0 370 971
A1

## (12) EUROPEAN PATENT APPLICATION

(21) Application number: 89830506.5

(22) Date of filing: 17.11.89

(51) Int. Cl.5: C03B 19/10

(30) Priority: 23.11.88 IT 367088

(43) Date of publication of application:
30.05.90 Bulletin 90/22

(84) Designated Contracting States:
AT BE DE ES FR GR

(71) Applicant: AZIENDA S.r.l.
Via Dante no. 2/2
Bologna(IT)

Applicant: R.P. COLOR S.r.l.
Via Statale 467 no. 155
Spezzano di Fiorano (Modena)(IT)

(72) Inventor: Silingardi, Vitaliano
Via Cilea No. 5
Bologna(IT)
Inventor: Ranuzzi, Paolo
Via Statale 467 No 155
Spezzano di Fiorano (Modena)(IT)

(74) Representative: Dall'Olio, Giancarlo
INVENTION s.n.c. Via Arienti 26
I-40124 Bologna(IT)

(54) Method for realization of granules, in particular spheroidal granules and the equipment for the carrying out of this method.

(57) The method foresees the previous melting of a vitreous mass and comprises in first the subdividing of this melted mass into a myriade of drops and then the throwing of these drops up against a veil (9) of fluid, the temperature of which is considerably lower than the melting temperature of this vitreous mass and the density of which is such to allow the drops to pass through it or at least to penetrate partially allowing anyway, the solidifying of these drops with conseguent defining of the corresponding solid vitreous granules (14); lastly the separation of aforesaid vitreous granules (14) from aforementioned fluid is accomplished.

Fig.1

# METHOD FOR THE REALIZATION OF GRANULES, IN PARTICULAR SPHEROIDAL GRANULES AND THE EQUIPMENT FOR THE CARRYING OUT OF THIS METHOD

It is known that for glazing, or enamelling of the ceramic tiles and for the glazing of metals, special vitreous preparations are utilized, known as frits.

It is known that the frit is obtained by thoroughly mixing, by means of simultaneous grinding, some acid substances (silica, boron, phosphorous etc.) with some basic substances (compounds of sodium, potassium, calcium, lead etc.). These substances are brought to melting point in a furnace, then poured out and cooled suddenly, usually by means of immersion in water.

By means of the above cooling, lumps of frit are obtained; from these lumps, frit is obtained in a granular or powdery form, by means of grinding.

In the first case the frit powder in a watery suspension, with possible additives and emulsion (the so called "barbottina"), is applied on the tile to be glazed or to be enamelled in various ways.

In the second case the granules of frit, with eventual additives and pigments are applied dry on the tile with the help of suitable glues.

The grinding of the lumps of frit, by means of which either powdered frit or granular frit (in this last case having a diameter between 2 and 10 tenths of a millimeter about), also gives rise to dust forming: therefore the presence of a suitable installation for the recovery and the recycling of the dust is necessary (wherever possible as, sometimes, a second melting alters the physiochemical features of the frit) in order to avoid waste as well as intollerable levels of pollution.

This last setback, as a consequence of the fact that a percentage of the very fine frit powder remains, however, suspended in the air, means, in the long run, risks for the health of the operators of the sector. It must also be emphasized that the prefixed devices for grinding are subject to wear and tear, which is aggravated by the hardness of the lumps of frit, requiring a constant maintenance, as well as substitution of these devices.

A method is already known by means of which glass microspheres are obtained.

By means of the known method the subdivision of a fluid glass jet (molten) into a myriade of small drops is foreseen and the solidifying of these drops in the air.

The installation that actuates this method is made up of a disk, driven in such a way to rotate constantly, onto which the liquid glass jet falls; by means of the effect of centrifugal force the liquid jet is subdivided into a myriade of small drops cast out into radial directions.

The surface tension gives the spherical form to these drops, form which is maintained by these drops on their way to the ground.

In order to allow the drops to solidify, following the thermic exchange between these drops and the air, the disk must be put at a height of about 10-15 meters from the ground level; the container that surrounds the space traversed by the drops has overall dimensions, from a bird's eye view, of about the same as the aforementioned height. The considerable overall dimensions of the installation which carries out this method are evident, overall dimensions which implicate, amongst other things, the placing of the outlet of the furnace (which does the melting of the glass mass) at a height, from ground level, of about 15-16 meters.

An object of the present invention is that of proposing a method by means of which is it possible to carry out, directly from a molten glass mass, solid glass granules for the glazing of ceramic and metals, or for the enamelling of ceramics or other uses.

Another object of the invention is that of proposing a method by which it is possible to carry out solid glass granules as such that an optimal transformation to a powdered form is had.

Another object of the invention is that of proposing a method by means of which it is possible to carry out, directly from a molten glass mass, solid spheroidal granules and/or oval ones.

Yet another prerogative of the invention is that of proposing a piece of equipment by which it is possible to carry out the above method, of simple realization, of reliable functionality, of limited overall dimensions and having a low cost in relation to the performance it gives.

The above prerogatives are obtained according to the proposals in the claims.

By means of the method proposed solid glass granules of a spheroidal form and/or oval form directly from a glass molten mass.

These granules can be used with many advantages in the glazing or enamelling of ceramic tiling (please see, belonging to the same applicant, Serial n. 089.327) or else for the enamelling of metals, or other uses.

By means of the present method, in comparison to the known methods indicated in the introductory statement, glass granules of frit are obtained without having to carry out the operation of grinding lumps of frit; therefore lower costs are had in comparison with the granules obtained by means of grinding (forming of the lumps of glass, drying them out and successively grinding them is avoided), and yields are obtained that tend to be of 100% (in fact there are no losses as work is done in the absence of dust), there are no problems of pollution and the noise produced by the equipment that carries out this method is much less as comparison with the installations of grinding of the lumps of frit.

In comparison to the known plants by which glass microspheres are obtained it is to be pointed out that the overall dimensions of the equipment which carries out the present method are a lot smaller regarding the overall dimensions of aforesaid installations.

Moreover curbing the cost of the execution of the equipment proposed, this allows this piece of equipment to be placed under the furnaces already existing, used for the melting of the mass of glass or frit.

A further aspect featuring the method proposed is consequent to the fact that with these latter spheroidal and or oval or anyway, of irregular form, but in the absence of dust.

The advantages of the application, on a ceramic tile, of granules of spheroidal frit in place of needle shaped granules has been pointed out in detail in the aforesaid U.S. Serial N. 089.327.

The present method is not limitative as regards to the obtaining of the powder of frit destined to the preparation of the "barbottine", on the contrary there are many advantages; in fact, as already recalled, the crushing of the granules obtained by the present method is facilitated by the internal tensions present in the granules themselves and for the fact that these latter have dimensions which are much smaller than the lumps of frit.

The features of the invention are pointed out as follows with particular reference to the attached drawings in which 1 and 2 show, in a schematic way, as many forms of carrying out the equipment that the method proposed actuates.

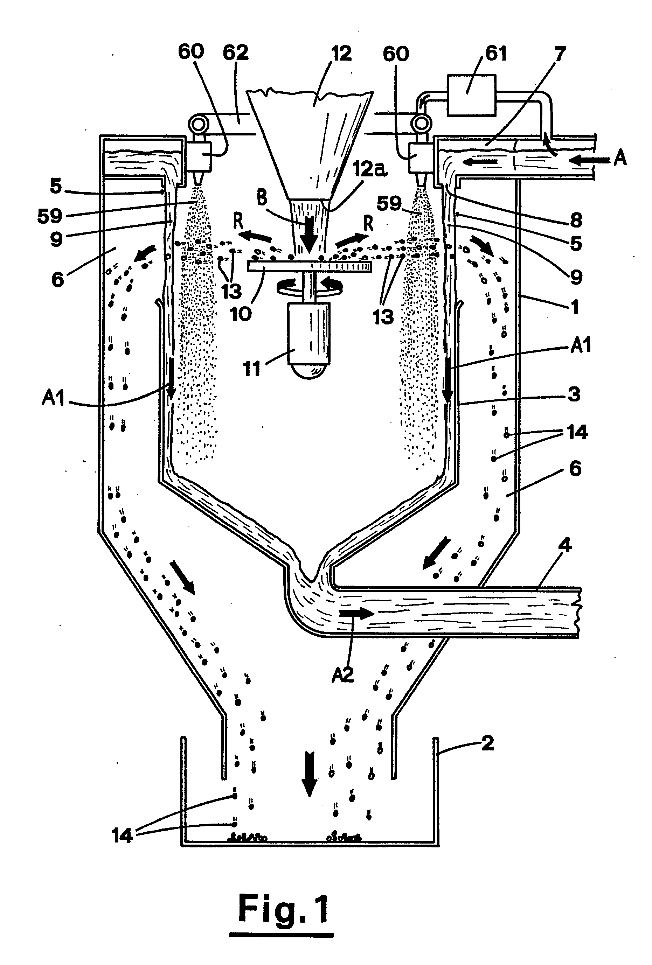

With reference to Figure 1, by 1 a case has been indicated which is open upwards, with a lower portion of a pyramid-like form, and a decreasing diameter proceding downwards, under which there is a collecting device 2. On the inside of the case there is a wall 3, made up according to a tubular profile, placed coaxially as regards to the case, open at the upper part and having the relevant lower part of a pyramid shape, with a decreasing diameter proceeding downwards, ending with a channel 4 that crosses the case 1.

Between the upper ends of the case 1 and the wall 3 there is a window 5, having a circumferential development, which makes up the entry for a channel 6, with an annular section, defined by the facing surfaces of this case and wall; this channel meets with the lower portion of the case.

Above the casing there is a tank 7, having an annular development with a circular opening at the bottom, facing window 5, the internal dimension of which is not more than the internal diameter of the tubular profile of the wall 3.

In an internal position as regards to the circular opening 8 there are a series of injectors-nebulizers 60 arranged according to a circumference, coaxially as regards the case 1; these injectors are derived from an annular channel 62 fed with suitable liquid (for example water) which, by means of a pump 61, is sucked in, from the tank 7, in the case illustrated.

Feeding the tank 7 in a noted way with liquid (arrow A), for example water, there is the formation in correspondence with the window 5 of a veil 9 of liquid which, starting from the opening 8, develops according to a three dimensional figure of a tubular form.

By activating the pump 61 a further veil 59 is created, inside the previous veil 9, by means of the action of the injectors-nebulizers 60, and develops in a three dimensional way in a similar manner to the latter veil: this veil is made up of nebulized liquid.

Downstream as regards to the window 5 the veil 9 is guided downwards from the internal surface of the wall 3; the lower part of this wall collects the liquid relevant to these veils 9 and 59 which, through channel 4, is conveyed (arrow A2) to the outside of the case where noted devices (not illustrated) see to the cooling of this liquid (heated up on the inside of the case for the reasons given as follows) which then is recycled.

For simplicity's sake of description the mentioned veils 59 and 9 will be called, further on, the first veil and the second veil.

On the inside of the case 1, at the height of the window 5, a disk 10 (example: of ceramic or other suitable material), is placed in a coaxial manner as regards to the case, being drawn into constant rotation through a motor which is supported in a noted way, not illustrated. Above the disk 10 a known device 12 is positioned (or furnace) having the purpose of melting a vitreous mass, for example of the type of frit as described in the premise; this device is provided underneath with an outlet 12a from which a melted vitreous mass (arrow B) comes out under the force of gravity.

It is to be pointed out that the temperature of the vitreous molten mass is much higher as regards to the temperature of the liquids which make up the previously mentioned veils 59 and 9.

The jet of frit falls onto the disk 10 which, through the centrifugal force, subdivides the same jet into a myriade of small drops 13 that are thrown out radially (arrow R), at a high speed, towards the window 5. The dimensions of the drops 13 depend mainly on the viscosity of the frit, on the surface tension and on the speed of rotation of the disk 10.

The distance between the disk and the first veil 9 of nebulized liquid influences the major or minor roundness of the drops 13 which become round because of the surface tension.

The drops 13 intercept, in correspondence to the window 5, in this order, the first veil 59 and the second veil 9, passing beyond them due to the speed impressed on them by disk 10.

A careful choice of the speed of the drops and of the thicknesses of the veils 59 and 9 is such to permit an efficacious thermic exchange between every drop 13 and each veil the aforesaid drop crosses.

More particularly the thermic exchange of the drops with the first veil 59 effectuates the cooling, with consequent solidifying at least on the surface of the same drops without deformation; the second veil 9 effectuates a further cooling in order to obtain solid glassy granules 14 (of a substantially spheroidal form and/or oval form as in the previous cooling of the drops, which are already spheroidal because of the surface tension, not having been unduly deformed).

These grains, downstream to the second veil 9, have a surface temperature which does not permit their sticking together should they come into contact with the internal surface of the case 1.

The aforesaid glassy solid granules are conveyed, through channel 6, into the collecting station 2 perfectly dry as the heat still contained in the granules is such to enable them to dry out by themselves.

The first veil 59 can also consist of any fluid, in particular gassy jets (for example steam); in this case the annular channel 62 is fed through the known devices, not illustrated.

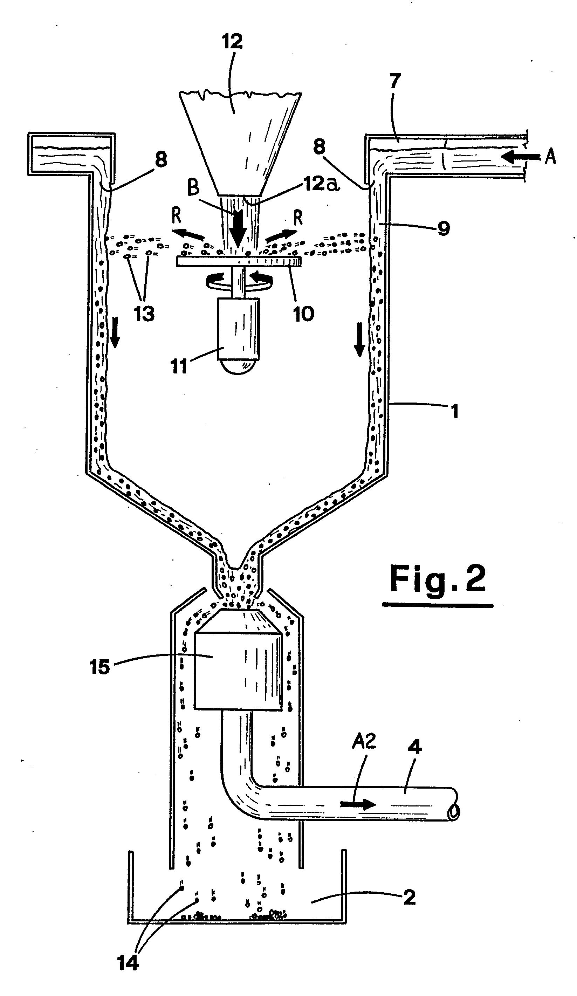

If the spheroidal form of the granule does not matter the cooling action of the second veil 9 is sufficient (therefore elimination is had of the first veil 59). In a variation proposed (fig. 2) the veil 9 of liquid flows directly onto the internal surface of the case 1; in this situation the drops 13 involve, at least partially, the veil 9 according to a depth of penetration which allows solidification (at least on the surface) of these drops with the defining of the corresponding solid glass granules 14 being spheroidal and/or oval. In the variation of fig. 2 the first veil 59 is not foreseen thus the corresponding considerations already expressed are to be taken into account. In this last situation every drop 13, in its impact against the veil 9 and, eventually, against the internal surface of the case 1, can divide up into two or more parts (fragments) with the consequent forming of the same number of solid glass granules 14.

The mixture made up of the liquid and the granules 14 is conveyed, through the lower conical trunk portion of the case 1, in correspondence with already known filtering devices 15 that see to the separation of the liquid (conveyed into channel 4) from the granules 14 (conveyed into the collecting station 2).

In short, by means of the method proposed solid glass granules of a spheroidal form and/or oval form directly from a glass molten mass, as in the form of realization of fig. 1, or of any form as per the variation of fig. 2, for example. .

If the aforecited granules are ground in order to obtain fine powder in order to prepare "barbottine" mentioned beforehand, the internal tensions to which these granules are subjected as a consequence of the rapid cooling, in particular, of the external tension towards the centre, facilitate the breaking up of the granules themselves; for this purpose it is preferable to use the granules obtained with the variation of fig. 2 as they can be realized in smaller dimensions than the spheroidal granules obtained with the device of Fig. 1. As already stated hereinabove the noise produced by the equipment that carries out this method (in particular the noise of the unit disk 10 - motor 11) is much less as comparison with the installations of grinding of the lumps of frit.

In the above described method and with the equipment which carries out this method, in order to make up the second veil, the use of liquid is supposed as being, in particular, water.

In alternative the cooling of the drops 13 can be carried out with one or more consecutive veils of liquid of any type, or else carried out with a dense veil made up of a previously chosen liquid. More generally speaking a suitable veil of fluid can be used (liquid and/or gassy) the temperature of which and the thickness of which must allow the solidifying, at least on the surface, of the drops 13.

For example, in order to define the second veil of fluid, a large number of gassy jets or liquids, or else a large number of gassy jets and liquids can be utilized.

Furthermore the veils 9 and 59 can be of a sweeping shape with a prismatic section and in place of disk 10 other devices can be used to subdivide the jet B into drops 13 and cast the latter into radial directions R.

## Claims

1) Method for the realization of solid glass granules, in-cluding the preventive melting of a glassy mass, characterized in that it foresees: the subdivision of this melted glass mass in a myriade of drops (13); the throwing of these drops against at least a veil (9) of fluid, the temperature of which is considerably lower as comparison to the temperature of the melting point of this aforesaid glassy mass and the thickness of which is such to allow at least a partial penetration of the drops which, however, allows their solidification (13), at least superficially with the consequent definition of correspondent solid glass granules (14); thus the separation of these glass granules from the aforementioned fluid.

2) Method for the realization of solid glass granules, including the previous melting of a glass mass characterized in that it foresees: the subdivision of this melted glass mass into a myriade of drops (13); the throwing of these drops in this order against a first veil of fluid (59), the temperature of which is considerably lower than the melting temperature of this glass mass the thickness of which is such to allow the drops to pass through it as well as being such to cause the hardening on the surface of these drops without changing their shape and, successively, their throwing against at least a second veil (9) of fluid the temperature of which is considerably lower as respect to the temperature of the melting of aforesaid glass mass and the thickness of which is such to allow the drops to penetrate partially, finishing off, anyway, the aforementioned superficial solidifying of the drops (13) with consequent defining of corresponding solid glass granules; thus the separation of these glass granules from the abovementioned fluid.

3) Method according to the Claim 2, characterized in that the aforementioned first veil of fluid (56) is made up of nebulized liquid.

4) Method according to Claim 2, characterized in that the aforesaid first veil of fluid (59) is made up of gassy jets.

5) Method according to Claim 1, characterized in that the separation of these aforesaid solid glass granules (14) from the aforementioned fluid is realized foreseeing a speed for these drops and a thickness of this veil of fluid (9) such to allow the drops to come out beyond this veil of fluid as solid glass granules.

6) Method according to Claim 2, characterized in that the separation of these solid glass granules (14) from the aforementioned fluid is realized by foreseeing a speed for these drops and a thickness of the aforesaid second veil of fluid (9) such to allow the drops to come out as solid glass granules beyond this latter veil of fluid.

7) Method according to Claim 1, characterized in that the aforesaid veil of fluid (9) is made up of at least a veil of liquid.

8) Method according to Claim 1 characterized in that the aforesaid veil of fluid (9) is made up of a plurality of gassy jets.

9) Method according to Claim 1, characterized in that this veil (9) of fluid is made up of a plurality of liquid jets.

10) Method according to Claim 1 characterized in that this veil of fluid is made up of a plurality of liquid and gassy jets.

11) Method according to Claim 2, characterized in that this second veil (9) of fluid is made up of at least a veil of liquid.

12) Method according to claim 2, characterized in that this second veil (9) of fluid is made up of a plurality of gassy jets.

13) Method according to Claim 2, characterized in that this second veil of fluid (9) is made up of a plurality of liquid jets.

14) Method according to Claim 2, characterized in that this second veil (9) of fluid is made up of a plurality of liquid and gassy jets.

15) Method according to Claim 7 or 11 characterized in that this veil (9) of liquid is made up of very dense drops of a predetermined liquid.

16) Method according to Claim 3 or 7 or 9 or 10 or 11 or 13 or 14, characterized in that this liquid is made up of water or a watery solution.

17) Equipment for the formation of solid glass granules, including a device for the melting of a glass mass, characterized in that it includes : first devices (7, 8), for the realization, on the inside of a case (1), of a veil (9) of fluid the temperature of which is a lot lower in comparison to the melting point temperature of this glassy mass; second device (4) to convey to the outside of the case the aforesaid veil of fluid, third device (10), placed on the inside of the case (1) and fed with this molten glass mass coming from aforesaid device (12), meant to subdivide the aforesaid glass mass in the myriade of drops (13) as well as throwing these latter against aforesaid veil (9) of liquid, the thickness of which is such to allow these same drops to penetrate at least partially, which anyway allows the solidifying of these drops (13) at least on the surface, with consequent definition of corresponding solid glass granules (14); fourth means for the separation of aforesaid glass granules for the aforesaid fluid.

18) Equipment according to Claim 17 characterized in that devices (60, 62) are foreseen for the realization, upstream to this veil (9) of fluid, of a further veil (59) of fluid, the temperature of which is much lower in comparison to the melting temperature of aforesaid glass mass and the thickness of which is such to allow these aforementioned drops to pass through said veil and to cause a solidifying of the surface of these latter drops without altering the form.

19) Equipment according to Claim 18 characterized in that the aforesaid devices (60, 62) are made up of ejector devices, deriving from a circular feeding channel (62), meant for the realizing of the aforesaid veil (59) of fluid through nebulized liquid.

20) Equipment according to Claim 18 characterized in that these devices (60, 62) are made up of ejector devices (60), derived from a circular feeding channel (62), prefixed in order to realize the aforesaid further veil (59) of fluid through gassy jets.

21) Equipment according to Claim 17 characterized in that the speed imposed on the myriade of aforesaid drops (13) and the thickness of aforesaid veil of fluid are such as to allow the coming out of the glass granules beyond the aforesaid veil of fluid, said fourth devices being made up of the wall (3), internal to this case (1), meant to guide the part of this veil of fluid not intercepted by these drops and to send this latter part of the veil of fluid towards the aforesaid second device (4), with this wall (3) locating, together with the aforementioned case (1), a channel (6) receiving the abovementioned glass granules (14).

22) Equipment according to CLaim 17 characterized in that the internal surface of the case (1) acts as a guide for the aforecited veil (9) of fluid as well as for the aforesaid solid glass grains (14) which have been solidified by the latter, with this internal surface suitable for sending the complex veil of fluid-solid glass granules towards the mentioned second and fourth device placed orderly in a cascade.

23) Equipment according to Claim 17 characterized in that these aforesaid first devices (7, 8) define for said veil of fluid a three dimensional figure of a tubular or prismatic form, containing the aforesaid third device (10), these latter device being such as to throw the aforecited myriade of molten drops (13) of the glass mass into a plurality of radial directions R.

24) Equipment according to Claim 24 characterized in that the aforesaid second device is made up of a channel whereas the aforementioned fourth device can be identified as filtering devices (15) placed in a cascade towards this channel which allows the transit through these filtering devices of the mentioned fluid conveying the aforesaid glass granules to a collecting station (2).

25) Equipment according to Claim 17 characterized in that this veil of fluid (9) is made up of at least a veil of liquid.

26) Equipment according to Claim 17 characterized in that this veil (9) of fluid is made up of a plurality of gassy jets.

27) Equipment according to Claim 17 characterized in that this veil (9) of fluid is made up of a plurality of liquid jets.

28) Equipment according to Claim 17 characterized in that the aforesaid veil of fluid is made up of a plurality of gassy and liquid jets.

29) Equipment according to Claim 17 characterized in that this veil (9) of fluid is made up of very dense drops of a prefixed liquid.

## Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A- 902 795 (DEUTSCHE GOLD-UND SILBER SCHEIDEANSTALT VORMALS ROESSLE) * Whole document * | 1,2,7, 13,16, 17,18, 25 | C 03 B 19/10 |

-----

|  |  |  | TECHNICAL FIELDS SEARCHED (Int. Cl.4) |
|---|---|---|---|
|  |  |  | C 03 B 19/00 |

The present search report has been drawn up for all claims

| Place of search | Date of completion of the search | Examiner |
|---|---|---|
| THE HAGUE | 16-02-1990 | VAN DEN BOSSCHE W.L. |